# EUROPEAN PATENT SPECIFICATION

(11) **EP 2 250 091 B1**
(45) Date of publication and mention of the grant of the patent: **27.02.2013**
(21) Application number: 09708180.6
(22) Date of filing: 30.01.2009
(51) Int. Cl.: B64F 1/32, B64F 1/36

(54) **BAGGAGE SYSTEM**
GEPÄCKSYSTEM
SYSTEME DE BAGAGES

(30) Priority: 05.02.2008 GB 0802119
(43) Date of publication of application: 17.11.2010
(73) Proprietor: Baa (Ip Holdco) Limited, London SW1V 1LQ (GB)
(72) Inventor: AIMABLE-LIMA, David, London SW1V 1LQ (GB); FRANSEN, Dirk, Vivian, Hypolyt, B-3600 Genk (BE)
(74) Representative: Meldrum, David James
(86) International application number: PCT/GB2009/000279
(87) International publication number: WO 2009/098439

(56) References cited:
- EP-A- 0 520 455
- EP-A- 1 174 374
- EP-A- 1 253 079
- WO-A-2006/098617
- DE-A1- 10 158 764
- DE-A1- 10 254 101
- DE-A1-102005 020 717
- GB-A- 2 224 147
- GB-A- 2 320 236
- US-A- 3 695 462
- US-A- 5 473 545
- US-A1- 2003 061 085
- US-A1- 2003 141 411

## Description

### FIELD

The present invention relates to baggage handling systems and in particular, but not exclusively, to baggage handling systems for airports. However, it will be appreciated that the invention is not limited to this particular field of use.

### BACKGROUND

Airport terminals around the world generally employ some form of system for checking in passengers' baggage, loading it in the cargo hold of a plane prior to the flight departing and returning the passengers' baggage at the end of their flight. The equipment required to provide this service, particularly at large international airports, can be quite extensive. Known baggage transportation systems used in airports may include a check-in system for departures and a collection system for arrivals.

An example of the passage of baggage at check-in and at collection at an airport may comprise the following. A passenger deposits their baggage at a check-in desk at the terminal. The passenger's baggage is then put on a conveyor which carries the baggage to a chute which guides the baggage to a build cell which may be located on a lower level of the building. Large international terminals may employ up to 200 or more build cells below their check-in area.

A build cell of the type used in such conventional baggage systems typically includes a conveyor for carrying baggage exiting the chute away from the chute exit. One or more manual handling personnel are assigned to each build cell to remove the baggage from the conveyor and onto a loading station adjacent the conveyor. Each build cell is designated to collect baggage for a specified flight in order to avoid baggage being sent to an incorrect destination. A tug and dolly transporting system then pulls up along side the loading station and the baggage is manually loaded into a unit-loading device (ULD), also know as a flight can.

A ULD serves to allow large quantities of cargo to be bundled into the one unit. This saves ground crew time and effort in the loading the plane as there are less individual units to handle. Once the ULD is loaded onto the tug and dolly it is transported to the plane and, depending upon the particular aircraft/ airline and any applicable rules or regulations, the baggage is either stored on the aircraft in the ULD or is manually unloaded into the aircraft.

A check-in system as described above suffers from a number of disadvantages. For example, the conveyor must be at ground level for the baggage to be moved to the loading station and picked up by the tug and dolly. Hence where multiple build cells are employed, a large surface area is taken up. Furthermore, as there must be enough ceiling height to accommodate transportation vehicles such as tugs and trucks between the build cells, this results in the build cell having more overhead space than may be required by other functions.

A further disadvantage of the present check-in system is that check-in times for flights generally take up to approximately 3 hours. If the baggage sitting on the conveyor can not be loaded into a ULD until check-in is complete for all passengers, that particular conveyor can not be utilised to store baggage for any other flights during this time.

Additionally, the need for transportation vehicles to collect the ULDs from the loading station requires access roads to be built within the baggage area. These roads take up a lot of space which could be used for other purposes. Furthermore, the use of transportation vehicles within the baggage area increases the risk of accidents occurring between vehicles and also inflicting injuries on ground crew working in or passing through the area.

When an aircraft arrives at a terminal, a tug and dolly collects either the ULD or the loose baggage (which is loaded into a ULD) from the aircraft and takes it to the arrivals baggage area in the terminal.

The baggage from the ULD is then manually unloaded and placed on a conveyor. A conveyor as may typically be deployed in a large terminal building works as follows. The conveyor includes an unloading section at ground level for receiving baggage unloaded from the ULD. The remainder of the conveyor path ascends, often in a pattern such as an ovoid or other winding configuration until it reaches a baggage reclaim carousel at a collection point. This style of winding conveyor path provides a suitably shallow incline for transporting baggage.

Once the conveyor transports the baggage to the baggage carousel, the passenger may collect their bag and exit the terminal.

A collection system as described above suffers from a number of disadvantages. For example, use of the ascending and winding conveyor path is particularly space inefficient. However, if the conveyor followed a linear path directly from the unloading section at ground level to the exit onto the baggage carousel, either the horizontal path would be too long or the incline would be too steep and gravity would cause the baggage to roll back down the carrier before it could reach the baggage carousel.

The collection system also requires that transport vehicles are able to access the uploading section. Hence this increases the risk of accidents and injuries as described above. Furthermore, road access must be provided for the vehicles and this takes up space which could potentially be used for another purpose.

Systems for controlling the movement of baggage around an airport are known, see for example, EP 1 070 664. This document is concerned in particular with the management of getting bags from the check-in desk to the correct container loading station. The document proposes a control system for tagging individual bags to facilitate easier tracking of bags within an airport.

GB 2 320 236, the closest prior art, discloses an identification system for allocating individual items on conveyer belts.

The present invention has been made, at least in part, in consideration of the problems and drawbacks of conventional systems.

### SUMMARY

Particular and preferred aspects of the present invention are set out in the appended claims.

According to the invention, there is provided a baggage handling system. The system comprises a build cell comprising a plurality of pre-loading queues operable to receive baggage and a loading station operable to receive baggage from individual ones of said queues. Thereby, a single loading station can be allocated to multiple destinations simultaneously. Thusly a number of loading stations may be reduced, and a more flexibly arrangement for operation of loading stations can be adopted. Furthermore, by control of different queues in such examples, a required size of early bag store can be minimised.

In some examples, individual ones of said queues are assignable to receive a destination and/or class designation. Thus, management of the queues to control baggage in different queues to be caused to end up at different destinations is facilitated.

In some examples, individual ones of said queues are operable to advance any baggage therein to the loading station. Thereby, different queues can be loaded at different times, enabling the allocation of different queues to handle baggage for different destinations.

In some examples, a plurality of said queues are arranged vertically above one another. Thus a space-efficient arrangement of queues can be provided to enable a high efficiency of space utilisation at a baggage handling facility.

In some examples, a movable conveying element can be provided operable to individually access queues in a stack of said vertically arranged queues. Thus, individual queues can be addressed separately to advance baggage therein for loading.

In some examples, a plurality of said queues are arranged horizontally adjacent one another. Thus a space-efficient arrangement of queues can be provided to enable a high

In some examples, individual ones of said queues are assignable to receive a destination and/or class designation. Thus, management of the queues to control baggage in different queues to be caused to end up at different destinations is facilitated.

In some examples, individual ones of said queues are operable to advance any baggage therein to the loading station. Thereby, different queues can be loaded at different times, enabling the allocation of different queues to handle baggage for different destinations.

In some examples, a plurality of said queues are arranged vertically above one another. Thus a space-efficient arrangement of queues can be provided to enable a high efficiency of space utilisation at a baggage handling facility.

In some examples, a movable conveying element can be provided operable to individually access queues in a stack of said vertically arranged queues. Thus, individual queues can be addressed separately to advance baggage therein for loading.

In some examples, a plurality of said queues are arranged horizontally adjacent one another. Thus a space-efficient arrangement of queues can be provided to enable a high efficiency of space utilisation at a baggage handling facility. If the horizontal and vertical arrays are combined at a single load cell, the space utilisation can be maximised.

In some examples, there can be a plurality of selectively motorised conveyors operable to move baggage from said queues to said load station. Thus management and carrying out of individual queue loading is facilitated.

In some examples, the loading station is operable to guide received baggage into a removably located baggage transportation container. Thus a baggage transportation container can be brought to the loading station for filling.

In some examples, a robotic arm can be provided operable to lift baggage from said loading station into said baggage transportation container. Thus a manual lifting requirement for baggage handling can be reduced, improving health and safety considerations for baggage system workers. Such a robotic arm can have a capability to reach into the rear of the container for loading.

In some examples, a robotic arm can be provided operable to selectively move an outfeed end of said load station to a predetermined position in said baggage transportation canister. Thus a manual lifting requirement for baggage handling can be reduced, improving health and safety considerations for baggage system workers.

In some examples a powered trolley system can be provided operable to transport a baggage transportation canister / ULD to and from the loading station. Thus health and safety considerations for baggage system workers can be improved as a loading station operative is not exposed to road traffic for transport of containers to and from the loading station. Additionally, there can be a reduction in obstacles in road areas due to a potential for storage of empty containers being stored within trolley system and not in roadways. In some examples, the powered trolley system can be extended to include a container baggage unload area.

In some examples, the powered trolley system comprises a container offloading facility operable to offload a baggage transportation container from the powered trolley system to an onward carriage vehicle. Thus transfer of containers can be conducted remotely from the loading station to improve health and safety considerations of workers. Also, a flexible arrangement for use of multiple containers in a powered trolley system can be adopted. Within the offloading facility a container lift unit can be incorporated to raise lower containers to required working / storage levels, the lift unit can be capable of accepting both Arriving and Departing containers.

In some examples, the powered trolley system comprises a holding area for temporary storage of baggage transportation canisters / ULD awaiting transfer to an onward carriage vehicle. Both full and empty containers can be stored including full containers before reclaim and empty containers after reclaim, full containers after flight build but prior to dispatch, empty containers in build cell but not at the build station. Additionally the system allows storage of partially built containers (<100% full) which can be recalled to the build cell to ensure maximum utilisation of available container volume. Thus the flexibility of the system to handle baggage in an efficient and controlled way can be enhanced.

In some examples, the powered trolley system is operable to carry a baggage transportation container containing arriving baggage. Thus arrivals and departures systems can be linked to provide further flexibility in operation.

Viewed from a further aspect, there can be provided a baggage handling system. The system can comprise a powered trolley system having a baggage transportation container /canister / ULD receiving station operable to receive a baggage transportation container into the system and a baggage transportation container emptying station operable to facilitate unloading of baggage from a baggage transportation container, and a baggage conveying system operable to convey unloaded baggage from the emptying station to an owner reclaim station. Thus a container unloading function can be separated from a transportation vehicle driving location, so as to reduce health and safety risk to workers. Also, more space efficient handling of arriving baggage may be conducted.

Viewed from another aspect, there can be provided a baggage handling system. The system can comprise a powered trolley system operable to receive baggage transportation containers thereinto. The powered trolley system can comprise: a container filling station operable to cause a baggage transportation container to receive baggage items thereinto; a container offload station operable to cause a baggage transportation container to be removed from the powered trolley system for carriage by a transportation vehicle; a container inload station operable to cause a baggage transportation container to be received into the powered trolley system from a transportation vehicle; and a container emptying station operable to cause a baggage transportation container to have a baggage item removed therefrom. Thereby a single integrated baggage handling system can be implemented for greater baggage throughput with the opportunity for control of the system to maximise efficiency.

In some examples, the container filling station can include a loading station as set out above. In some examples, the container emptying station can include an unloading station as set out above.

In some examples, the offload and onload stations are arranged to transfer a baggage transportation container to and from a ground vehicle. Thus an intermediate transportation vehicle can be provided for access from the baggage facility to a destination carriage vehicle. In some examples, the offload and onload stations are arranged to transfer a baggage transportation container to and from a destination carriage vehicle.

In some examples, the offload and onload stations are co-located. Thus a further flexibility for use of a baggage facility can be provided.

Further aspects and embodiments will be apparent from the following detailed description.

### BRIEF DESCRIPTION OF THE DRAWINGS

Specific embodiments will now be described, by way of example only, with reference to the accompanying drawings in which:
Figure 1 is a schematic view of a build cell;
Figure 2 is a schematic view of the build cell of figure 1 showing additional surrounding elements;
Figure 3 is a schematic view of an arrivals section;
Figure 4 is a schematic view of a baggage handling system.
Figure 5 is a flow chart showing conceptual steps in a departures process;
Figure 6 is a flow chart showing conceptual steps in an arrivals process;
Figure 7 is a flow chart showing conceptual steps in managing containers;
Figure 8 is a schematic view of an automated loader;
Figure 9 is a schematic view of an automated loader;
Figure 10 is a schematic view of an automated loader;
Figure 11 is a schematic view of an automated loader;
Figure 12 is a schematic view of a conveyor and platen based system for transporting containers within a baggage handling system; and
Figure 13 is a schematic view of a height alteration unit for the conveyor and platen system of Figure 12.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the present invention as defined by the appended claims.

### SPECIFIC DESCRIPTION

Examples of a number of systems for baggage handling will now be described. These examples are described in the context of baggage handling at an airport, although the skilled reader will appreciate that the same techniques and systems can be employed for baggage handling in other locations.

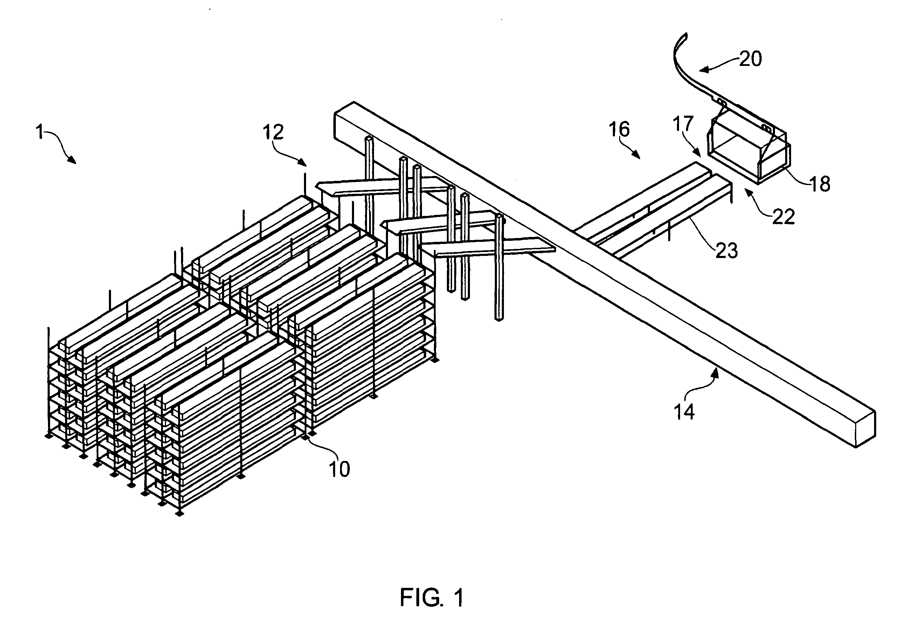

Referring to Figure 1, an example of a build cell 1 of a departures baggage management system is illustrated.

Many airlines and security authorities place restrictions on the amount of baggage that a passenger can carry into the passenger cabin of an aircraft. All other baggage is then checked in for carriage in the aircraft hold. Such so called "checked baggage" is typically taken from the passenger when the passenger registers for a flight or flights and is then transported by systems and staff at the airport to the hold of the aircraft on which the owning passenger is to travel.

In the present example, a number of queues 10 are provided to receive such checked baggage. The transportation of the baggage from a check-in desk to the queues 10 may typically be by conveyor and may involve some manual handling to ensure that baggage destined for different aircraft is separated, and possibly sorted according to segregation rules ,class etc. Thus, baggage arriving at the queues 10 is loaded into the queues such that all baggage in a given queue is destined for the same aircraft. In some examples, this sorting may be performed at the loading position for the queues.

Baggage in the queues 10 can be held therein until a trigger for loading the baggage is received. Individual ones of the queues can be called for loading at different times, such that individual queues can be allocated to baggage for different aircraft, class and different parts of the same aircraft in the case of multi-hold aircraft. Different class, aircraft parts or other baggage separation rules for baggage all being carried by the same aircraft may be termed "segregations". This flexibility to allow a single build cell to handle baggage for more than one aircraft enables complex baggage handling strategies without a need to tie up individual build cells for long periods allocated to a particular aircraft, effectively this provides a unique local buffer system to manage and balance the workflow to the build cell operator.

In the present example, each lane of the queues 10 is an individually controllable conveyor. This allows each lane to be individually advanced for loading of baggage. In other examples the conveyors may be replaced with, for example a roller bed of driven or non-driven rollers. In the case of non-driven rollers, a pusher may also be provided to push the queue contents for the particular lane to be advanced.

The lanes of queues are linked via a control system (not shown) to ensure that the queue operation is linked to the arrival of specific containers at the build cell 1 and so ensure the loading of each bag is recorded to a specific container.

The build cell 1 of the present example also includes a queue access selector 12 operable to enable the baggage held in individual queue lanes to be advanced to a loading point within the build cell. As shown in Figure 1, the queues 10 of the present example are arranged in a horizontal array of vertical stacks of lanes. Thus, in the present example, the queue access selector 12 includes a movable ramp operable to be raised or lowered to an outflow end of each individual queue lane to allow the baggage in that queue lane to be received onto the ramp. In the present example, the ramp includes a conveyor to carry the baggage in a controlled manner. This provides that when the ramp is at a steep incline, the descent of the baggage down the ramp is controlled and when the ramp is non-inclined or negatively inclined the baggage is transported effectively. In some examples the ramp may instead have driven rollers.

As can be seen from figure 1, the queue access selector 12 of the present example provides a separate ramp for each paired vertical stack of queue lanes. In other examples there may be provided more or fewer ramps. In one example there may be one ramp per horizontally arranged queue lane stack. In another example there may be a single ramp of sufficient width to provide access to all stacks without the need for horizontal movement of the ramp. In a further example, there may be provided one or more horizontally movable ramps which can be moved between different ones of the stacks. In other examples, the queue access selector may include one or more lifts, each operable to raise or lower one or more baggage items from the queue to the transfer conveyor.

Once baggage is transported by the queue access selector 12 from the queues 10, it arrives at a transfer conveyor 14 which carries the baggage from the outflow of the queue access selector 12 to a load station feed 16. As with the previously described conveyors, the transfer conveyor 14 and load station feed 16 may be conveyor belts, driven rollers or non-driven rollers or a combination of any of these.

The baggage is then carried along the load station feed 16 to the load station 17. At the load station 17 the baggage is loaded into a container 18. The container 18 may be a so-called unit loading device (ULD) which is conventionally used at airports for carriage of baggage to and from aircraft. The skilled reader will appreciate that a number of different sizes and shapes of ULDs exist and are used in combination with different types and classes of aircraft. It is not important in the context of the present example what form of ULD is used, indeed a container other than a ULD could be used without compromising the operation of the systems of the present example.

Also shown in Figure 1 is a reject conveyor 23. This can be used to return any baggage which arrives at the load station 17 in error. Any baggage item which arrives at the build station 17 but is not to be loaded into a presently received container 18 (i.e. a baggage item which can be considered as being unauthorised to load) can be returned to the baggage sorting system or sent to an expedite area via the reject conveyor 23.

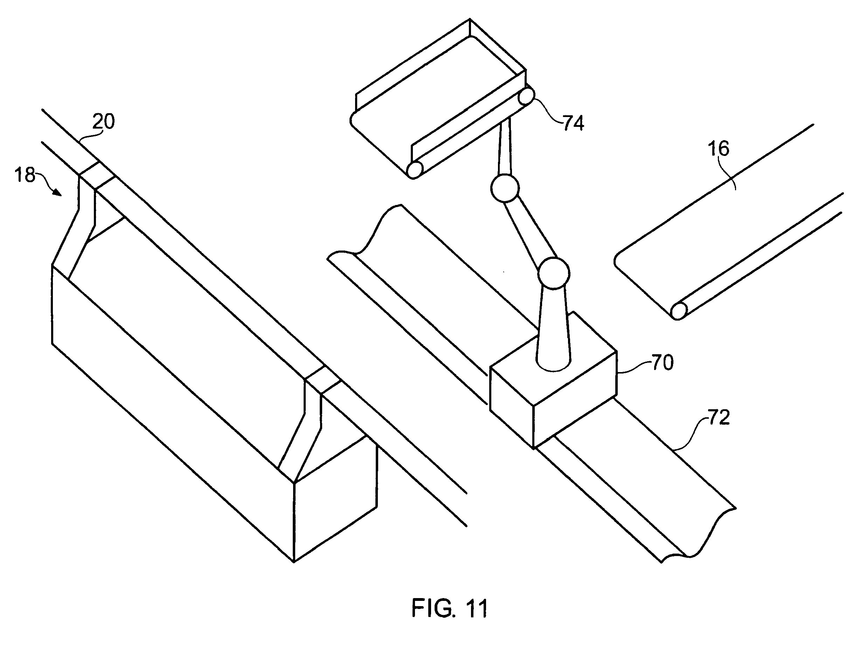

As can be seen in Figure 1, the container 18 is carried by a powered trolley system 20, or other method of transporting ULDs e.g. ref Figure 11. The powered trolley system 20 allows individual containers 18 to be brought to and taken away from the loading station 17 of the build cell 1 according to a loading demand.

Within the powered trolley system 20, each container 18 can be carried by any one of a number of container carriers. The container carriers may include a cage or platform for supporting a container, or may include a hook or other suspension arrangement for suspending the container. Each container carrier can include some form of tagging or memory system which can be used in conjunction with the control system for the powered trolley system 20 to ensure that any given container held within the powered trolley system 20 is uniquely identified according to flight number. This can also assist in the management of containers within the overall powered trolley system storage capacity.

The loading of the baggage from the load station feed 16 to the container 18 at the load station 17 can be carried out manually by a loading operative 22. In other examples, the need for a loading operative 22 may be replaced by a mechanical loading arrangement. This mechanical loading arrangement can be fully manual, semi automated or fully automated.

Thus there has now been described an arrangement and operation method for a build cell of an airport baggage handling facility. This build cell offers flexibility and high throughput as it does not need to be reserved for use by only a single flight/aircraft at any given time. Although the build cell can only load baggage for a single flight/aircraft at any given time, it can receive and manage baggage for a number of different flights/aircraft at any one time. This arrangement also requires the minimum amount of human interaction near or at ground carriage vehicles and can reduce the number of manual handling operatives required to service a given volume of baggage. Furthermore, it allows for an integrated approach with an arrivals system to allow maximum flexibility and cross-configurability of a baggage handling facility.

Additionally, by having multiple queues per build cell, fewer build cells of the present examples are required than conventional one flight per lane build laterals. In one example, one build cell of the present example, may replace approximately 4½ conventional build laterals. Although each build cell of the present example can be expected to take up more space than a single conventional build lateral, a considerable space saving may be achieved. This space saving is illustrated by the stacking arrangement shown at reference 10 in Figure 1. In one example, the provision of 40 build cells of the present example may be installed in place of 190 conventional build laterals, giving a total space saving of approximately 50%. This allows the saved space to be used for other purposes, such as storage, retail, parking, backup equipment and/or building plant. Alternatively, a smaller terminal building may be provided to handle the same volume of baggage.

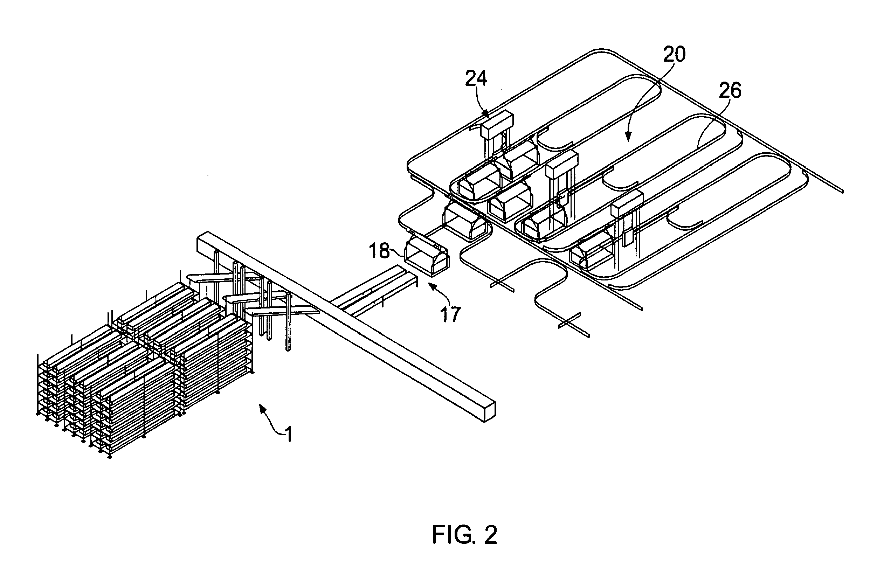

Figure 2 shows the build cell 1 of Figure 1 in the slightly wider context of a powered trolley based container handling arrangement. As shown in Figure 2, a container 18 can be moved to the load station 17 of the build cell 1 for filling of the container. A loaded container can then be carried by the powered trolley system 20 for either holding or offloading onto a ground carriage vehicle such as a conventional airport tug/tractor and trolley/dolly arrangements.

As shown in figure 2, the powered trolley system 20 can include one or more container offload stations 24 where containers which are ready for loading onto an aircraft are offloaded from the powered trolley system 20 onto a ground carriage vehicle. Typically this may be a conventional airport tug/tractor and trolley/dolly type vehicle, although any other vehicle capable of carrying a loaded container could be used.

There may be a number of circumstances in which baggage may be ready for loading into a container before an aircraft is ready to receive containers for loading, or before a container is ready for offloading from the powered trolley system 20. Containers which are fully loaded and awaiting an aircraft to be loaded into and containers which are part full and awaiting more baggage can be stored in a holding section of the powered trolley system, illustrated at 26 in figure 2. Containers 18 held in such holding sections may include a mix of empty, part filled and full containers. For example, in the case of flight transfers, baggage for arriving passengers having an onward connecting flight may need to be recovered to the owning passengers for immigration, security and/or customs procedures. The baggage for those passengers may then be immediately re-checked in, sometimes many hours before a connecting flight is due to leave. This may be termed "early" baggage. Early baggage may also arise in the case of, for example business class passengers who may be allowed by an airline to check in before main check-in for a given flight opens to allow those passengers to progress through security checks and/or into a customer facility lounge. Such early baggage can be allocated to a single lane in the queues of a build cell without preventing that build cell from servicing other flights in the meantime. Such baggage can alternatively be directed to an early bag store, which may be within or separate to the main baggage handling system. Also, once a given known quantity of early baggage has been received (for example all baggage for passengers from a given incoming connecting flight), the lane may be emptied into a container, which container then waits in the holding area of the powered trolley system for either further baggage or the necessary aircraft to become available.

Although not shown in Figure 2, it is possible for the departure baggage handling system of the present example to link into a unified powered trolley system serving both departures and arrivals baggage handling. In such a system, an arriving container carrying baggage for connecting passengers, which baggage does not require unloading between flights, can be allocated directly from the arrivals portion to the departures portion of the baggage handling system.

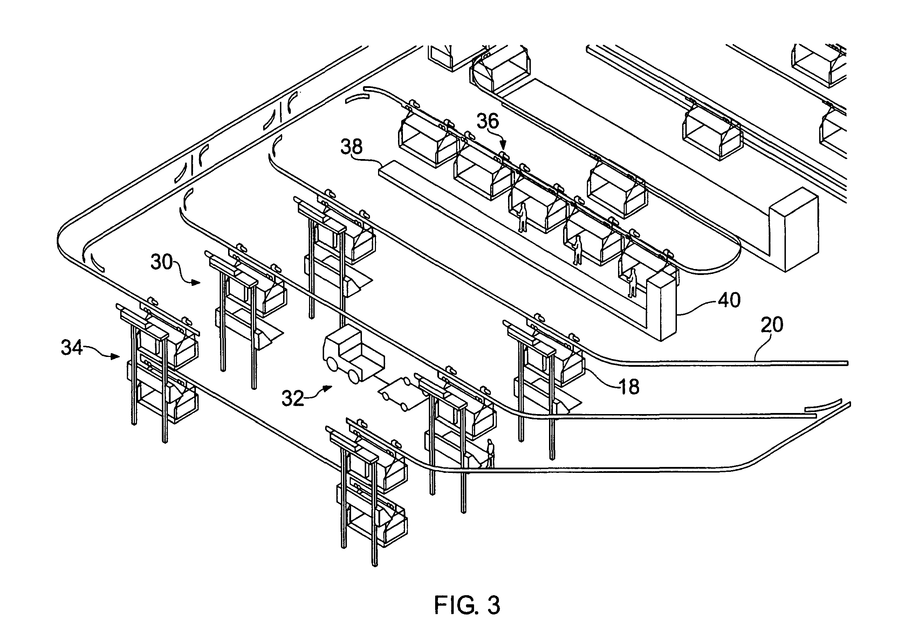

Figure 3 shows an example of a baggage handling system for an arrivals facility. Here, arriving containers 18 having baggage for arriving passengers can be carried from an aircraft by a ground carriage vehicle 32. The container 18 can then be loaded into the powered trolley system using a container upload station 30. In practice the arrangement of the container upload station 30 may be identical to the container offload station 24 described above, and in some examples of a linked departures/arrivals baggage system the same physical stations may provide both upload and offload duties.

In some examples, the powered trolley system 20 can include multiple levels, so interlevel lifts 34 can be provided to enable containers to be transferred between different levels. In the example of Figure 3, the containers can arrive at a ground level and be lifted up to a higher level for transfer to an unloading station at that higher level.

Once received into the powered trolley system 20, the container 18 can be delivered to an unloading position 36. Here, the container is available for unloading of baggage therein. In the present example, the unloading is carried out manually by an unloading operative whereby the baggage is transferred from the container 18 onto an arrivals baggage conveyor 38. Some form of carriage equipment 40 is then used to transport the baggage from the arrivals baggage conveyor 38 to a baggage reclaim area for passengers to reclaim their baggage.

In the present example, it is assumed that the baggage handling system is located underneath the passenger-accessible floors of a terminal building (as is conventional in many medium to large airports). In these circumstances, the carriage equipment 40 is essentially a vertical lift equipment to move the baggage up to a reclaim area. This may take the form of a conventional winding path inclined conveyor, or some other arrangement such as a bucket lift type arrangement. It should be noted that even if a conventional winding path inclined conveyor is used, the total height gain required is less than in a conventional arrivals system as the baggage has already been raised above ground level by a certain amount to be loaded onto the powered trolley system. Thus the volume of space that needs to be dedicated to the carriage equipment is reduced.

Thus there has now been described an example of a system for handling of arriving baggage at an airport baggage handling facility. This arrangement requires the minimum amount of human interaction near or at ground carriage vehicles and can reduce the number of manual handling operatives required to service a given volume of baggage. Furthermore, it allows for an integrated approach with a departures system to allow maximum flexibility and cross-configurability of a baggage handling facility.

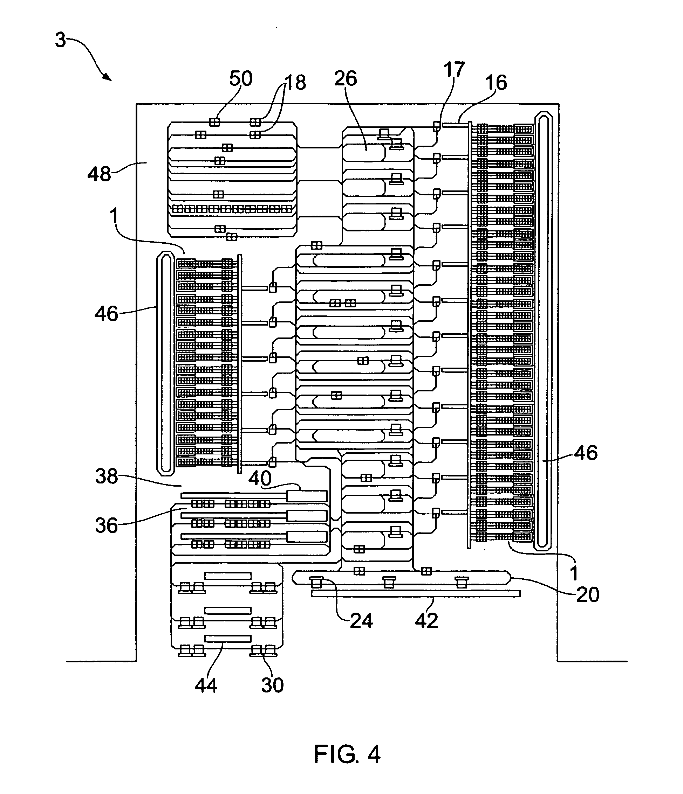

Figure 4 now shows a complete integrated baggage handling facility 3 including a number of departures build cells of the type described in respect of Figure 1 and arrivals unloading facility of the type described in respect of Figure 3. A baggage handling facility of this type may typically be installed at an airport terminal.

In Figure 4, it can be seen that a plurality of departures build cells 1 are arranged adjacent to one another. In the present example, there are in fact a total of eighteen build cells distributed between two banks of build cells, one on either side of the baggage handling facility 3. Each bank of build cells 1 has outgoing baggage supplied thereto by a baggage conveyor 46. In the present example, the baggage conveyors 46 receive baggage from passenger check-in desks elsewhere in the terminal building.

As already described above with reference to Figures 1 and 2, baggage in individual queues of the build cells 1 is loaded into containers 18 carried within a powered trolley system 20. The powered trolley system 20 links the build cells 1 with container offloading stations 24. In the present example, the container offloading facilities 24 are located with a dedicated tug and dolly loading zone 42, thus providing that all tug and dolly traffic associated with departing baggage is confined to a limited area of the baggage facility.

For the sake of clarity in explanation, the figures show only a single level system. However, as mentioned above, the powered trolley system can operate on multiple levels. This can increase the efficiency of routing between given locations. This can also allow different build stations to be on different levels, and/or allow different unload stations to be on different levels, and/or can allow build stations and unload stations to be on different levels. In some examples, it may be convenient to have all build stations on a lowest level, and all unload stations on a higher level above the build stations. This has advantages of minimising the horizontal space used by the baggage handling system and of lifting unloading baggage as high as possible using the powered trolley system still packed in containers, before unloading the containers for additional raising in height to a baggage reclaim station in a passenger-accessible part of the terminal.

Further, the powered trolley system 20 also integrates with an arrivals facility as discussed above with reference to Figure 3. A number of tug and dolly unloading zones 44 are provided for unloading of containers of arriving luggage. These containers are transferred into the powered trolley system by the container upload stations 30. The containers of arriving baggage then move either for unloading or for holding for onward transfer. Containers for unloading are carried to the unloading positions 36. Here, the containers are unloaded onto an arrivals baggage conveyor 38. The unloaded baggage then travels to a baggage reclaim facility elsewhere in the terminal via the carriage equipment 40. Containers for onward transfer are carried into the departures section of the powered trolley system, and may be held in a waiting area 26 until the onward travel aircraft is ready for loading. In some examples, the upload stations 30 may be co-located with and/or interchangeably functional as offload stations 24.

Also provided in the present example is a holding area 48 for storage of empty containers 18 between uses. The holding area 48 of the present example includes one or more container on/offload stations 50 to enable containers to be entered into and removed from the system without taking up capacity at the arrivals and/or departures loading stations. Containers may be stored in the holding area for a number of reasons, the most likely being that they are simply not required at a given time. It should be considered that many containers are the property of the airline rather than the airport, as each aircraft model/design may be compatible with different numbers of slightly different shaped containers. The provision of the holding area 48 for currently unused containers also provides for all containers at an airport to be either en-route to or from an aircraft or within the baggage handling system, there being no need or opportunity for spare containers to be left around in the apron region of the terminal.

Thus it can be seen that a single integrated baggage handling system can handle baggage for arrivals, departures and transfers with a minimum exposure of personnel to hazardous vehicle loading and movement areas, and with great flexibility for handling of early baggage and for handling of multiple flights per container loading station. Such a system thus allows for improved efficiency of baggage handling, with improved efficiency of personnel utilisation and improved health and safety circumstances for personnel.

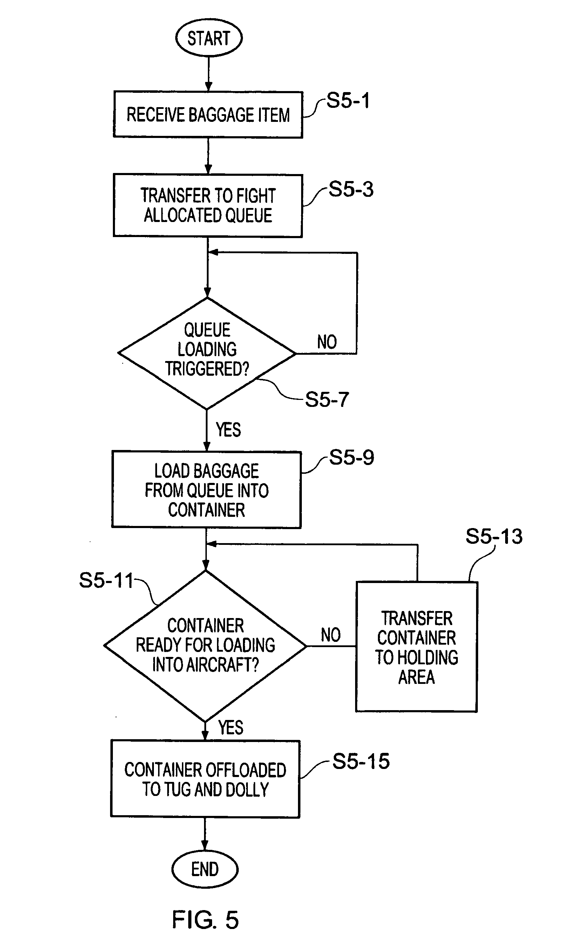

An example of how a particular item of departing baggage is carried around the baggage system from receipt from a passenger at a check-in desk to delivery to an aircraft will now be described with reference to Figure 5.

Figure 5 is a flowchart showing the various conceptual steps in handling departing baggage. Starting at step S5-1, the baggage item is received into the baggage system, for example at a passenger baggage check-in desk. This baggage item then is transferred to a queue at a build cell allocated to the flight upon which the baggage item is to be carried at step S5-3. The organisation and control of allocating baggage items to a build queue can be altered depending upon the requirements and capacities of the airport and airlines involved. However, a typical arrangement may include the following steps:
i) sort flights in order of scheduled departure time (STD);
ii) for each flight identify the number of segregations (and possibly identify expected number of bags for each segregation);
iii) assign flights, in turn, to a build cell, wrapping when the last cell is reached;
iv) assign segregations to queues (buffer lines) within the build cell, a given queue is normally dedicated to that flight and segregation for at least the period from STD-120 to STD;
v) assign a "last minute" buffer line for each flight.

Starting from this procedure, tweaks and adaptations can be applied to deal with different flight circumstances. One approach may include assigning flights in STD order to different cells and then within the cells assigning different segregations in rotation. Once this has occurred, any overlapping allocations can be identified and swapped to a different build cell to avoid load conflicts. An overlapping allocation may be considered to be a situation where two different flight/segregation combinations having a STD within a threshold time separation from one another are assigned to the same cell. In some examples a suitable threshold may be two hours prior to departure. In other examples a longer or shorter threshold time may be set.

In order to control the flow of bags from check-in to the build cells in such a way as to avoid clogging build cells with bags that are not to be loaded anytime soon, an intermediate storage can be implemented (not shown). This may be termed an early bag store (EBS) A set of principles for handling of baggage in terms of allocation directly to a build cell or allocation via the intermediate storage can include:
i) if before, for example, STD-120, send to general store.
ii) if after STD-120 and Authorised To Load (ATL) then send directly to build cells, otherwise send to early bag store.
iii) if bags in store become ATL and the time is after STD-120, then send to build cells;
iv) if after, for example, STD-45, then send to build cell queue for mixed container;
v) if after, for example, STD-30, sent to expedite area for rapid handing of late bags to avoid flight delays.

The thresholds for moving bags between different categories can be altered according to need. For example, the threshold for use of the intermediate store can be adjusted according to the relative capacities of the build cell queues and the intermediate store. Also the thresholds for diversion to a mixed container and/or to the expedite area can be set according to factors including aircraft size, passenger numbers and transportation distance between build cell and destination aircraft. The expedite area is not detailed herein as this is a special handling area for late received baggage which bypasses the main handling system so as to get late baggage to the aircraft as fast as possible so as to avoid delaying a departure. Such an expedite area thus naturally lies outside the main handling system and may typically be manually intensive work in order to provide the flexibility to handle many different urgent situations at different times and in different ways. It is also possible to route containers on the powered trolley system through this area to receive expedited bags.

The process of managing movement of the baggage item from check-in to the queue can be automatically controlled. In one example a tagging and tracking system such as that described in EP 1 070 664 can be used. Such a tagging system may be extended in the context of the present examples, to include tagging and tracking of individual containers, to enable a control system to have knowledge of which baggage items are contained within each container, to ensure that containers are correctly directed to a target destination. Tagging of the containers may comprise a permanently applied electronically readable identifier for each container, which identifier can be used by the tracking system for recording the location of individual baggage items in different containers.

Once the baggage item is in a build cell queue, it waits until a suitable time is reached for loading baggage from that queue into a container (step S5-7). A set of rules may be implemented to control the holding of bags in the build cell queues and triggering a load procedure. Suitable guidelines may include:
i) collect bags in buffer lines until build trigger threshold is reached;
ii) load bags in line when trigger is reached AND the cell is available;
iii) where there are multiple requests for build, use the following priorities:
   1) Last mixed ULD (i.e. last container for a given flight);
   2) closing of segregated ULDs (i.e. last containers for segregated loading for a given flight - typically precedes last mixed ULD by around 15 minutes);
   3) greatest number of bags in line.

Once the queue containing the baggage item is triggered to be loaded, the queue is advanced (making use of the queue access selector 12, transfer conveyor 14 and load station feed 16 described above) for the baggage item to be loaded into a container 18 at the loading station 17 (step S5-9).

Once the baggage from the queue has been loaded into the container, a check is performed to determine whether the container is ready for loading into the aircraft (step S5-11). If not (for example if the container is not full and more baggage is expected, or if the aircraft is not ready to receive baggage containers yet), the container with the baggage item in is transferred to a holding area 26 within the powered trolley system 20 (step S5-13).

Once the container containing the baggage item is ready for loading into the target aircraft (once the container has within it all baggage which it is necessary for it to hold, and the aircraft is ready for loading), the container 18 is carried within the powered trolley system 20 to the container offload station 24 to be offloaded from the powered trolley system to a tug and dolly which will transport the container to the aircraft (step S5-15). At this stage the baggage item has exited the baggage handling system within the airport buildings, such that this conceptual process can be considered to have ended.

To assist in understanding these examples, consider some example numbers for handling of baggage. For the purposes of this example, let there be 30 departing flights an hour (one every 2 minutes on average) to be serviced from the baggage handling system. For each flight let there be 4 main segregations and one mixed (i.e. five in all). Let the buffer lines (queues) be used for the two hours leading up to departure. The queues must therefore accommodate 60 flights x 5 segregations = 300 lines in total.

If there are 24 queues per cell, this would require 12.5 cells. For the purposes of this example, let the number of cells be 15 to enable maximum capacity operation during maintenance time etc. If the flights were evenly spaced in time over the 15 cells, there would be 4 flights per cell at any one time. If these flights were evenly spaced in time, then there would be one flight closing (in a cell) every 30 minutes. This arrangement thus provides for any given cell to at any one time be mainly used for loading containers for one flight, but also be available to store baggage for other (mostly later) flights, and to interrupt the "main" loading to load bags for other (mostly earlier) flights as required. Thus a truly flexible and efficient system can be provided.

It should be noted that loading of containers at the build cells is dependent upon container (ULD) availability. In order to be able to build (load) a ULD the right sort of ULD has to be available (i.e. type and ownership). While very early build is theoretically possible, it may be that inbound aircraft have not yet brought in the required ULDs. Thus one can either wait to build until such time as the ULDs become available (via inbound flights) or one would have to have additional ULDs in stock. Since the ULDs are typically owned by the airlines that use them, the airlines may not wish to have the expense and logistic issues associated with these "extra" ULDs. So, for the purposes of the present examples, it is assumed that ULD build starts at STD-120. This is no earlier than conventional build approaches, so should not lead to a more onerous ULD requirement than using such conventional approaches.

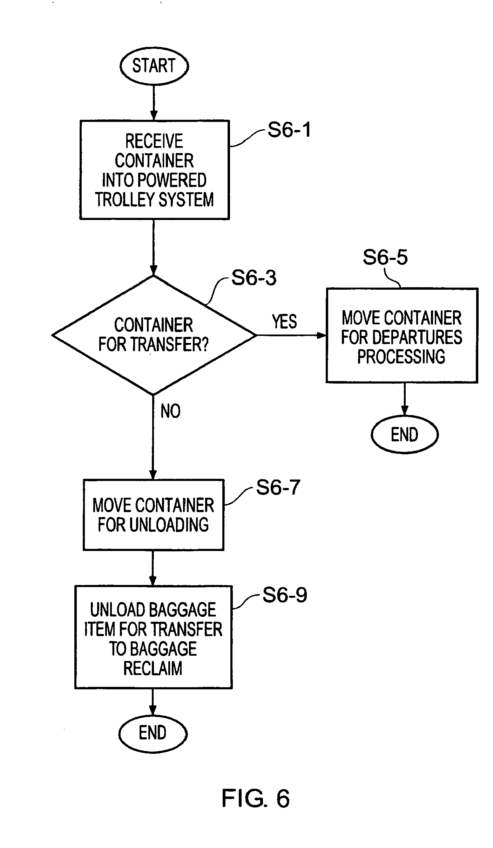

The treatment of the baggage item upon arrival at a destination airport also implementing a system according to the present examples, is shown conceptually in Figure 6.

At step S6-1, the container 18 in which the baggage item is stored is received from a tug and dolly which carried the container from the aircraft into the baggage handling system at a container upload station 30. Once the container is within the powered trolley system 20, a check is performed to determine whether the entire container is to be passed for onward transfer in its present state (which is to say that all baggage in the container is designated for onward transfer with no need for intermediate unloading) at step S6-3. If so, the container is moved for departures processing (step S6-5) and the arrivals process is ended.

If the container is not for immediate transfer, then the container is moved for unloading at an arrivals baggage conveyor 38 (step S6-7). The unloaded baggage item then travels to a baggage reclaim facility elsewhere in the airport building via carriage equipment 40 (step S6-9). The arrived process is thus ended.

Thus, even in this relatively simple example of a single baggage item, it can be seen that the baggage handling systems of the present examples enable a controlled and flexible approach to baggage handling.

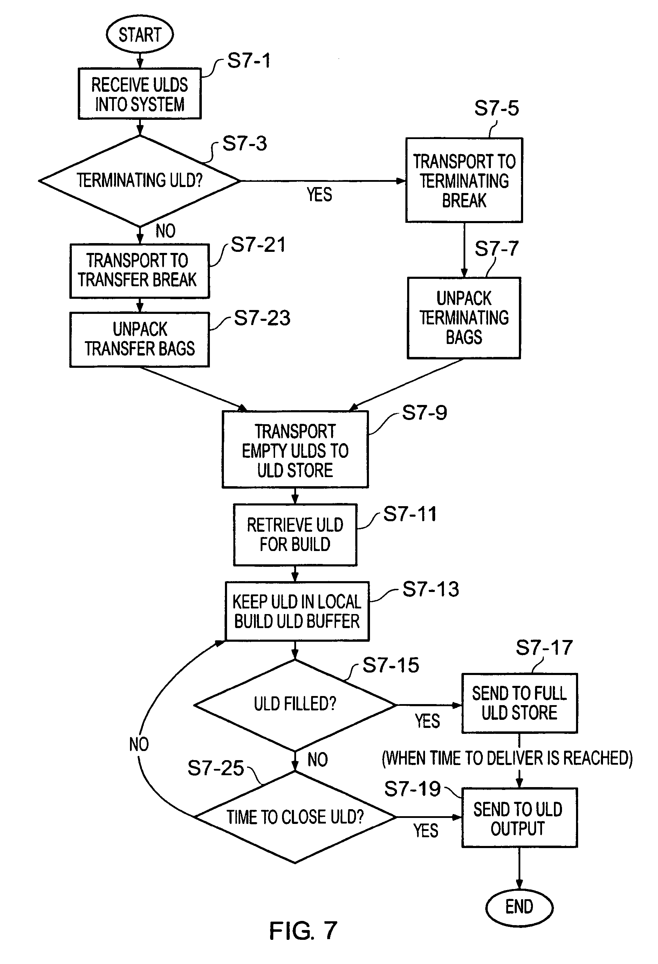

To enable the skilled reader to better understand the management of containers 18 (ULDs) within the baggage handling system of the present examples, a flow chart detailing ULD handing is shown in Figure 7..

Starting at Step S7-1, ULDs are received into the baggage handling system. For the purposes of this example, it is assumed that the ULDs arrive only by way of receipt containing baggage for an incoming flight. Any incoming ULDs which arrive not carrying baggage from an incoming flight can be sent directly to the ULD store, thus skipping all steps prior to S7-9.

At step S7-3, a check is performed to determine whether the contents of the received ULD are terminating at the airport in which the baggage handling system is located. If so, processing continues at step S7-5, where the ULD is transported to a terminating break (unloading position 36). Then, at step S7-7 the terminating baggage is unloaded from the ULD before the ULD is send to the ULD store at Step S7-9.

A stored ULD can then be retrieved from the store at step S7-11 in response to a request for a ULD to be used for baggage for a departing flight. The ULD is then transferred at step S7-13 to a local buffer for the build cell from which that ULD will receive baggage for the outgoing flight. Form this local buffer, the ULD can be called forward to the build cell for filling with departing baggage. Once the ULD has been filled, a check is performed at step S7-15 as to whether the ULD is fully loaded. If so, processing continues at step S7-17 where the ULD is sent to a store or holding location for full ULDs before being sent for offloading from the powered trolley system to an aircraft at step S7-19.

If it is determined at step S7-3 that the received ULD contains baggage which it not terminating at the airport at which the baggage handling system is located (i.e. transfer baggage) then processing continues at step S7-21 where the ULD is transported to a transfer break. A transfer break is a dedicated unloading area to where the ULD can be routed for opening and unloading if all or any bags in that ULD are known to be Transfer Bags for connecting flights. The transfer baggage is then unpacked from the ULD at step S7-23 before the ULD is transferred to the empty ULD store at step S7-9. If a received ULD contains both terminating and transfer baggage, the ULD can be routed to both terminating and transfer breaks. The order of processing can be predetermined or can be set according to a known load pattern of the ULD.

If it is determined at step S7-15 that the ULD is not yet fully loaded, then processing continues at step S7-25 where a check is performed to determine whether it is time to close the ULD. If so, processing continues at step S7-19 as before. Otherwise the ULD is held at the local build cell buffer (step S7-13) until more bags are to be loaded or the ULD timeout is reached.

Thus the handling of ULDs within the baggage handling system of the present examples can be understood.

As has been mentioned above, each build cell can include a container loading station, where baggage transferred from the build cell queues is loaded into containers carried within the powered trolley system. As was described with reference to Figure 1 above, the loading can be carried out manually or by a mechanical loading process.

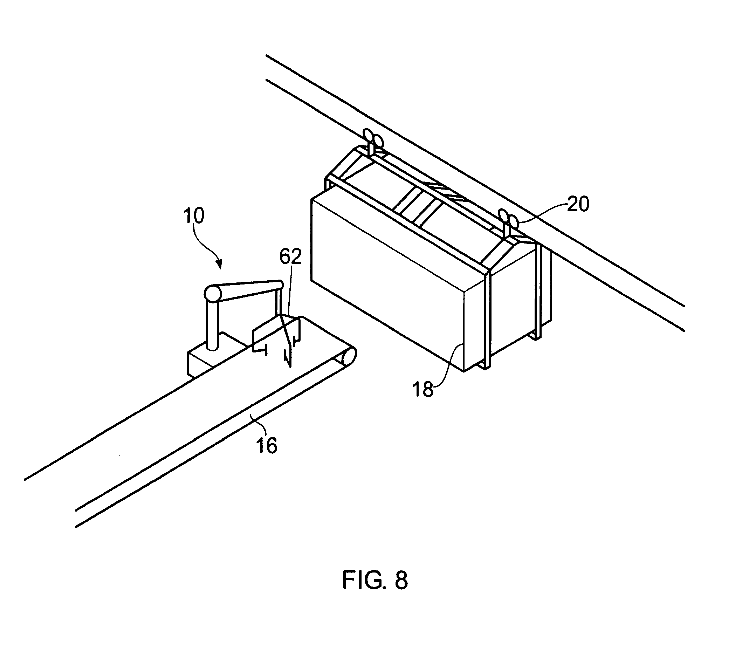

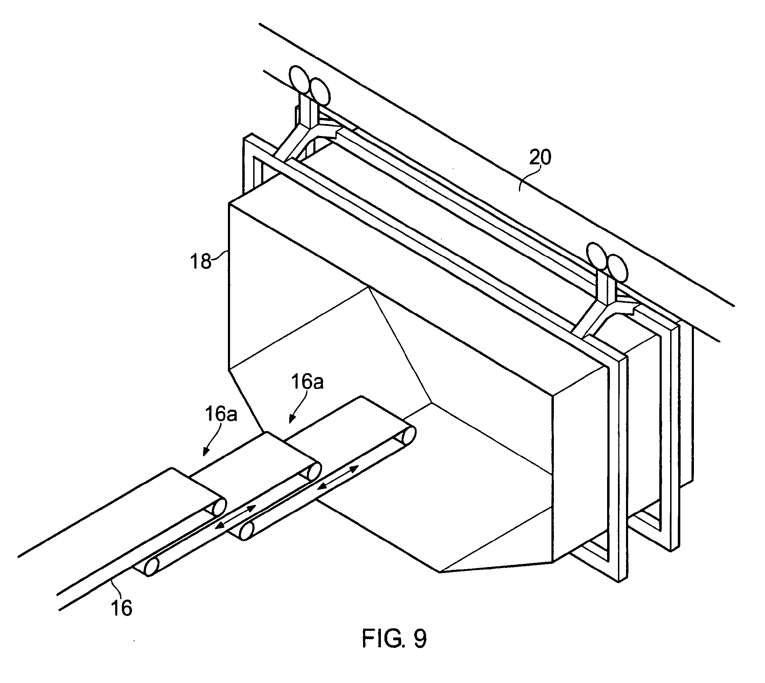

A first example of a mechanical loader is shown in Figure 8. (Refer Photos Sent previously) In this example, the loading of the baggage from the load station feed 16 to the container 18 held within a transport cage of the powered trolley system at the load station 17 is performed by a mechanical lifter 60. In the present example, the mechanical lifter 60 includes a lifting arm under computer control such as a robotic arm and a gripper 62 attached to the arm to holding the baggage items. Other relative arrangements of mechanical lifter may be performed. For example, as shown in Figure 9, the load station feed 16 may extend or be extendable (16a) into the volume of the container 18. By use of such a system, it is possible to record the exact position of each baggage item within a container 18. This can facilitate easier location of baggage items, for example if a container is loaded with some terminating and some transfer baggage it can be easier to divide the container contents into the two categories. Also, if a passenger unexpectedly fails to board an aircraft, knowing not only the container but also location within the container can hasten the process of removing that passenger's bags before the aircraft departs. In some examples, this information can be stored in a computer system which manages the baggage handling system, or in a memory associated with and located with the container, and/or it may be recorded on a printed record physically attached to or placed in the container.

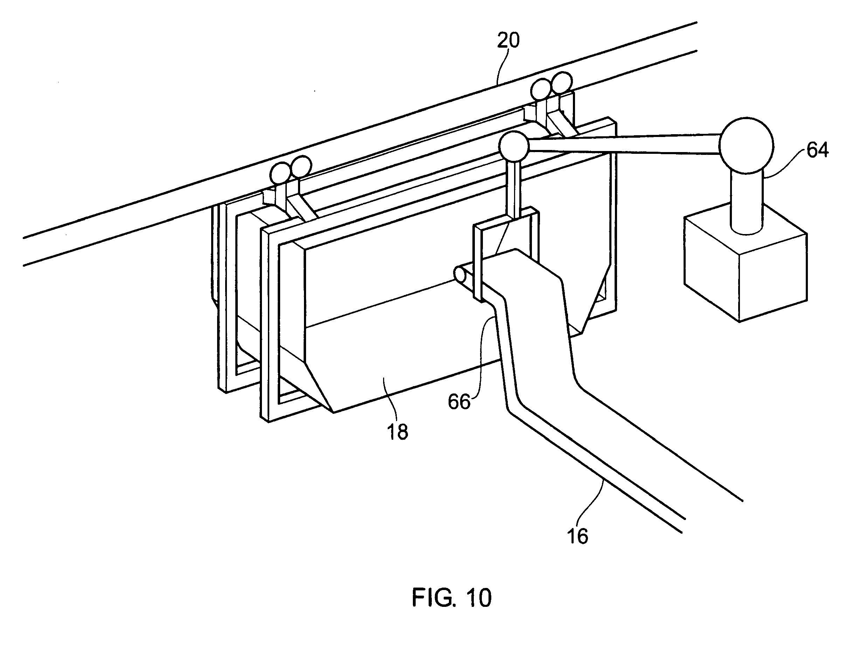

Another example of a mechanical loader is shown in Figure 10. In this example, the mechanical loader 64 causes a section 66 of the conveyor of the load station feed 16 to be moved relative to the container 18 held within a cage of the powered trolley system 20. Thus the exit point of the conveyor into the container can be altered for each baggage item to enable efficient stacking of each container without a danger of dropping baggage items onto each other with the associated risk of damage. In this example, the movable section 66 of the load station feed 16 may be formed from a number of smaller conveyor sections, which may in turn be belt type conveyors or overlapping or extending plate type conveyors for ease of repositioning movement of the section 66. The loader of this arrangement can record bag position/status etc as for the examples of Figures 8 and 9.

A further example of a mechanical loader is shown in Figure 11. In this example, a mechanical loader 70 is provided which can move transversely along a track 72. The loader 70 includes a lift element 74 which can lift a baggage item carried along the load station feed 16 from the load station feed 16 into a container 18 carried in the powered trolley system 20. According to this example, the mechanical loader 70 can transfer baggage items from a single load station feed 16 into two or more different containers 18, both transported by the powered trolley system 20 to a position adjacent the loader track 72. Thus the mechanical loader 70 can move along the track 72 to be able to place baggage items into different ones of the two or more containers 18. By using such a system, a single build station can be used to load two or more different containers at any given time, thus further increasing the flexibility of the baggage handling system. The loader of this arrangement can record bag position/status etc as for the examples of Figures 8 and 9.

Further examples of mechanical loader arrangements are shown in publications EP 1 145 805 and EP 1 174 374. Arrangements such as those disclosed in these documents may be used within a baggage handling system of the present examples.

Thus there have now been described a number of examples of mechanical loader systems which can be used for loading of baggage into containers at a build cell. Similar mechanical arrangements could be used for unloading of baggage from containers of arriving baggage.

Although the above examples mention only individual baggage items received via a check-in desk and returned via a baggage reclaim area, the present invention has far broader applicability. For example, the baggage items may be received from commercial customers as well as individual travellers. Thus there may not be a passenger associated with each baggage item. The baggage items may therefore include items entrusted for carriage by a post/mail/courier company. The baggage items may also include non-public baggage such as items belonging to the airlines and/or airport operators as well as or instead of items belonging to government departments or agencies and/or law enforcement agencies. Such baggage items might be expected to be safe for carriage in passenger or cargo aircraft, but be unsuitable for receipt at a public check-in desk or return at a public baggage reclaim area.

Although the above examples have described that the containers of baggage are carried between the baggage handling system of the airport buildings and the individual aircraft by tug and dolly, the present disclosure incorporated other approaches to container transfer. For example, the powered trolley system may be configured to extend to individual aircraft parking areas and include arrangements, such as movable track sections and/or mechanical transfer arrangements (lifting arms, movable rails, cranes etc) to enable the containers to be directly loaded and unloaded between the aircraft and the powered trolley system.

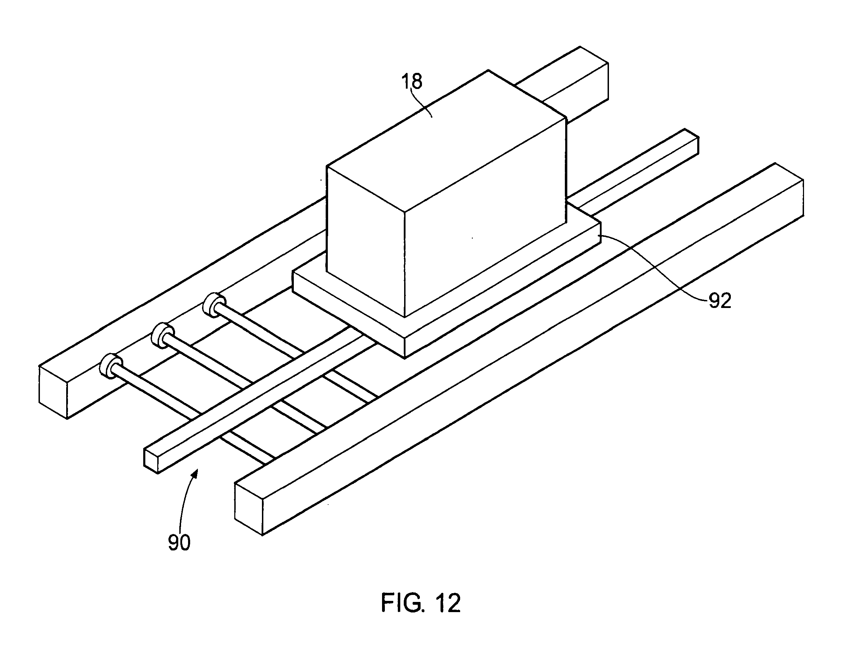

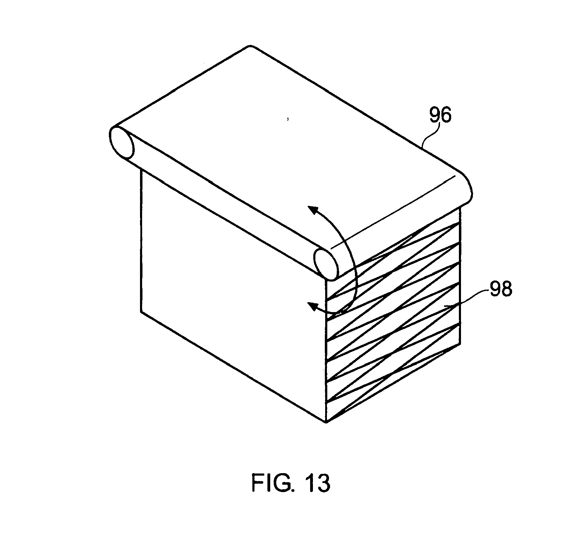

Although the above examples are described in the context of a powered trolley system, other container carriage and handling systems could be used instead. In one example, a system using a roller conveyor platen could be utilised. An example or such a system is shown in Figure 12. In this example, a roller conveyor system 90 is installed in place of the powered trolley system previously described. The roller conveyor system 90 includes a track of rollers along which articles can be carried. At least some of the rollers are powered, or a separate powered drive belt arrangement can be provided for groups of rollers. Such a roller conveyor system can be installed embedded within a floor surface, directly mounted onto a floor surface or carried above a floor surface by supports. The roller conveyor system 90 can carry thereon a number of platens 92, which can in turn carry individual containers 18 thereon. The roller conveyor platen system can then move the containers 18 around a baggage handling system in much the same way as the powered trolley system already described. Figure 13 illustrates a mechanism for moving containers between levels in a roller conveyor platen system. A load bearing surface 96 can be provided which may be in the form of a conveyor roller bed or a short belt type conveyor. The container, either with or without a platen, can be transferred onto this surface 96 from the roller conveyor system, and a scissor lift 98 can raise or lower the surface 96. IN some examples, the scissor lift can operate to induce a tilt in the surface 96 so as to aid the containers in rolling onto or off of the surface 96.

In the present description, the word baggage means generally; bags, suitcases, luggage and packages being items of baggage belonging to passengers travelling by a vehicle in circumstances where the baggage is separated from the passenger during a voyage. Typically this occurs in travel by aircraft, but the present inventions are also applicable to analogous situations where baggage is separated from a passenger during travel. Examples may include rail travel, sea travel and space travel.

Although the present invention have been described in the context of baggage handling of checked baggage for passengers, the handling systems proposed by the present invention are equally applicable to handling of other forms of packages for carriage. The skilled reader will appreciate that a system of the type described could be used in any circumstance where articles need to be transferred from an inflow to a transportation device and/or received from a transportation device to an article outflow.

The following numbered clauses set out certain aspects of the disclosed teachings:
1. A baggage handling system comprising: a build cell comprising: a plurality of pre-loading queues operable to receive baggage; and a loading station operable to receive baggage from individual ones of said queues.
2. The baggage handling system of clause 1, wherein individual ones of said queues are assignable to receive a destination and/or a segregation designation.
3. The baggage handling system of clause 1 or 2, wherein individual ones of said queues are operable to advance any baggage therein to the loading station.
4. The baggage handling system of clause 1, 2 or 3, wherein a plurality of said queues are arranged vertically above one another.
5. The baggage handling system of clause 4, further comprising a movable conveying element operable to individually access queues in a stack of said vertically arranged queues.
6. The baggage handling system of any preceding clause, wherein a plurality of said queues are arranged horizontally adjacent one another.
7. The baggage handling system of any preceding clause comprising a further build cell comprising a plurality of pre-loading queues operable to receive baggage and a loading station operable to receive baggage from individual ones of said queues; wherein the loading station of the build cell is operable to receive baggage from individual ones of the queues of the further build cell.
8. The baggage handling system of any preceding clause, further comprising a plurality of selectively motorised conveyors operable to move baggage from said queues to said load station.
9. The baggage handling system of any preceding clause, wherein the loading station is operable to guide received baggage into a removably located baggage transportation container.
10. The baggage handling system of clause 9, further comprising a robotic arm operable to lift baggage from said loading station into said baggage transportation container.
11. The baggage handling system of clause 9, further comprising a robotic mechanism operable to selectively move an outfeed end of said load station to a predetermined position in said baggage transportation container.
12. The baggage handling system of clause 9, 10 or 11, wherein the system is operable to record the loaded location of a baggage item within a removably located baggage transportation container.
13. The baggage handling system of clause 9 or any clause dependent thereon, further comprising a mechanised transport system operable to transport a baggage transportation container to and from the loading station.
14. The baggage handling system of clause 13, wherein the mechanised transport system comprises a container offloading facility operable to offload a baggage transportation container from the powered trolley system to an onward carriage vehicle.
15. The baggage handling system of clause 13 or 14, wherein the mechanised transport system comprises a holding area for temporary storage of baggage transportation container awaiting transfer to an onward carriage vehicle.
16. The baggage handling system of any of clauses 13 to 15, wherein the mechanised transport system is operable to carry a baggage transportation container containing arriving baggage.
17. The baggage handling system of any of clauses 13 to 16, wherein the mechanised transport system is a powered trolley system, a roller conveyor platen system or an in floor roller flight conveyor.
18. [not claimed] A baggage handling system comprising: a powered trolley system having a plurality of powered carriers each suspended from a rail of a rail network, each carrier being operable to carry a baggage transportation container, the powered trolley system having a baggage transportation container receiving station operable to receive a baggage transportation container into the system and a baggage transportation container emptying station operable to facilitate unloading of baggage from a baggage transportation container; and a baggage conveying system operable to convey unloaded baggage from the emptying station to an owner reclaim station.
19. [not claimed] The baggage handing system of clause 18, wherein the receiving station is operable to receive a baggage transportation container from an incoming carriage vehicle.
20. [not claimed] The baggage handling system of clause 18 or 19, wherein the emptying station comprises a parking region for a baggage transportation container received in said powered trolley system and a loading station of said baggage conveying system.
21. [not claimed] A baggage handling system comprising a powered trolley system having a plurality of powered carriers each suspended from a rail of a rail network, each carrier being operable to receive a baggage transportation container, the powered trolley system comprising: a container filling station operable to cause a baggage transportation container to receive baggage items thereinto; a container offload station operable to cause a baggage transportation container to be removed from the mechanised transport system for carriage by a transportation vehicle; a container inload station operable to cause a baggage transportation container to be received into the mechanised transport system from a transportation vehicle; and a container emptying station operable to cause a baggage transportation container to have a baggage item removed therefrom.
22. [not claimed] The baggage handling system of clause 21, wherein the container filling station includes the system of any of clauses 1 to 17.
23. [not claimed] The baggage handling system of clause 21 or 22, wherein the container emptying station includes the system of any of clauses 18 to 20.
24. [not claimed] The baggage system of clause 21, 22 or 23, wherein the offload and inload stations are arranged to transfer a baggage transportation container to and from a ground vehicle.
25. [not claimed] The baggage system of any of clauses 21 to 24, wherein the offload and inload stations are co-located.
26. [not claimed] A baggage system configured to receive baggage intended for one or more baggage transportation vehicles having different destinations, to sort the baggage by intended transportation vehicle, to load the baggage into a transportation container receivable into the intended transportation vehicle, and to transfer the container for loading into the intended transportation vehicle, wherein the system is operable to store baggage within the system before and/or after loading into a transportation container so as to provide for just in time provision of loaded containers for loading into the intended transportation vehicle.
27. [not claimed] The system of clause 26, comprising the system of any of clauses 21 to 25.

Although the invention has been described with reference to the above specific examples, it will be appreciated by those skilled in the art that the invention can be embodied in many other forms.

## Claims

1. A baggage handling system, characterized that it comprises:
a build cell (1) comprising:
a plurality of pre-loading queues (10) operable to receive baggage; and
a loading station (17) operable to receive baggage from individual ones of said queues.

2. The baggage handling system of claim 1, wherein individual ones of said queues (10) are assignable to receive a destination and/or a segregation designation.

3. The baggage handling system of claim 1 or 2, wherein individual ones of said queues (10) are operable to advance any baggage therein to the loading station.

4. The baggage handling system of claim 1, 2 or 3, wherein a plurality of said queues (10) are arranged vertically above one another.

5. The baggage handling system of claim 4, the system further comprising a movable conveying element (14) operable to individually access queues (10) in a stack of said vertically arranged queues.

6. The baggage handling system of any preceding claim, wherein a plurality of said queues (10) are arranged horizontally adjacent one another.

7. The baggage handling system of any preceding claim comprising a further build cell comprising a plurality of pre-loading queues operable to receive baggage and a loading station operable to receive baggage from individual ones of said queues; wherein the loading station of the build cell is operable to receive baggage from individual ones of the queues of the further build cell.

8. The baggage handling system of any preceding claim, further comprising a plurality of selectively motorised conveyors operable to move baggage from said queues to said load station.

9. The baggage handling system of any preceding claim, wherein the loading station is operable to guide received baggage into a removably located baggage transportation container (18).

10. The baggage handling system of claim 9, further comprising one or more selected from the group comprising:
a robotic arm operable to lift baggage from said loading station (17) into said baggage transportation container (18); and
a robotic mechanism operable to selectively move an outfeed end of said load station (17) to a predetermined position in said baggage transportation container (18).

11. The baggage handling system of claim 9 or 10, wherein the system is operable to record the loaded location of a baggage item within a removably located baggage transportation container (18).

12. The baggage handling system of claim 9 or any claim dependent thereon, further comprising a mechanised transport system operable to transport a baggage transportation container (18) to and from the loading station (17).

13. The baggage handling system of claim 12, wherein the mechanised transport system comprises a container offloading facility operable to offload a baggage transportation container (18) from the powered trolley system (20) to an onward carriage vehicle.

14. The baggage handling system 13, wherein the system further comprises one or more selected from the group comprising:
holding area for temporary storage of baggage transportation container (18) awaiting transfer to an onward carriage vehicle;
the mechanised transport system is operable to carry a baggage transportation container (18) containing arriving baggage; and
the mechanised transport system is a powered trolley system (20), a roller conveyor platen system (90) or an in floor roller flight conveyor.

## Patentansprüche

1. Gepäckhandhabungssystem, **dadurch gekennzeichnet, dass** es Folgendes umfasst:
eine Aufbauzelle (1), die Folgendes umfasst:
mehrere Vorladewarteschlangen (10), die betreibbar sind, um Gepäck zu empfangen; und
eine Ladestation (17), die betreibbar ist, um Gepäck von Einzelnen der Warteschlangen zu empfangen.

2. Gepäckhandhabungssystem nach Anspruch 1, wobei Einzelne der Warteschlangen (10) bestimmt werden können, um eine Ziel- und/oder Aufteilungsbezeichnung zu empfangen.

3. Gepäckhandhabungssystem nach Anspruch 1 oder 2, wobei Einzelne der Warteschlangen (10) betreibbar sind, um irgendein darin befindliches Gepäckstück zu der Ladestation vorwärts zu bewegen.

4. Gepäckhandhabungssystem nach Anspruch 1, 2 oder 3, wobei mehrere der Warteschlangen (10) vertikal übereinander angeordnet sind.

5. Gepäckhandhabungssystem nach Anspruch 4, wobei das System ferner ein bewegliches Förderelement (14) umfasst, das betreibbar ist, um auf Warteschlangen (10) in einem Stapel der vertikal angeordneten Warteschlangen einzeln zuzugreifen.

6. Gepäckhandhabungssystem nach einem vorhergehenden Anspruch, wobei mehrere der Warteschlangen (10) horizontal nebeneinander angeordnet sind.

7. Gepäckhandhabungssystem nach einem vorhergehenden Anspruch, das eine weitere Aufbauzelle umfasst, die mehrere Vorladewarteschlangen, die betreibbar sind, um Gepäck zu empfangen, und eine Ladestation, die betreibbar ist, um Gepäck von Einzelnen der Warteschlangen zu empfangen, enthält; wobei die Ladestation der Aufbauzelle betreibbar ist, um Gepäck von Einzelnen der Warteschlangen der weiteren Aufbauzelle zu empfangen.

8. Gepäckhandhabungssystem nach einem vorhergehenden Anspruch, das ferner mehrere wahlweise motorisierte Fördereinrichtungen umfasst, die betreibbar sind, um Gepäck von den Warteschlangen zu der Ladestation zu bewegen.

9. Gepäckhandhabungssystem nach einem vorhergehenden Anspruch, wobei die Ladestation betreibbar ist, um empfangenes Gepäck in einen entnehmbar angeordneten Gepäcktransportbehälter (18) zu führen.

10. Gepäckhandhabungssystem nach Anspruch 9, das ferner ein oder mehrere Elemente umfasst, die aus der folgenden Gruppe ausgewählt sind:
einen Roboterarm, der betreibbar ist, um Gepäck von der Ladestation (17) in den Gepäcktransportbehälter (18) zu heben; und
einen Robotermechanismus, der betreibbar ist, um ein Ausgabeende der Ladestation (17) wahlweise zu einer vorgegebenen Position in dem Gepäcktransportbehälter (18) zu bewegen.

11. Gepäckhandhabungssystem nach Anspruch 9 oder 10, wobei das System betreibbar ist, um den Ladeort eines Gepäckelements innerhalb eines entnehmbar angeordneten Gepäcktransportbehälters (18) aufzuzeichnen.

12. Gepäckhandhabungssystem nach Anspruch 9 oder einem hiervon abhängigen Anspruch, das ferner ein maschinelles Transportsystem umfasst, das betreibbar ist, um einen Gepäcktransportbehälter (18) zu und von der Ladestation (17) zu transportieren.

13. Gepäckhandhabungssystem nach Anspruch 12, wobei das maschinelle Transportsystem eine Behälterentladeeinrichtung umfasst, die betreibbar ist, um einen Gepäcktransportbehälter (18) von dem motorisierten Transportwagensystem (20) zu einem Anschlussträgerfahrzeug zu entladen.

14. Gepäckhandhabungssystem nach Anspruch 13, wobei das System ferner ein oder mehrere Merkmale umfasst, die aus der folgenden Gruppe ausgewählt sind:
einen Haltebereich zum vorübergehenden Aufbewahren von Gepäcktransportbehältern (18), die auf ein Umladen auf ein Anschlussträgerfahrzeug warten;
das maschinelle Transportsystem ist betreibbar, um einen Gepäcktransportbehälter (18), der ankommendes Gepäck enthält, zu transportieren; und
das maschinelle Transportsystem ist ein motorisiertes Transportwagensystem (20), ein Rollenförder-Plattensystem (90) oder ein bodengebundener Rollenkettenförderer.

## Revendications

1. Système de manutention de bagages, **caractérisé en ce qu'**il comprend :
une cellule d'assemblage (1) comprenant :
une pluralité de lignes de pré-chargement (10) pouvant être utilisées pour recevoir des bagages ; et
un poste de chargement (17) pouvant être utilisé pour recevoir des bagages provenant de lignes individuelles desdites lignes.

2. Système de manutention de bagages selon la revendication 1, dans lequel des lignes individuelles desdites lignes (10) peuvent être affectées de manière à recevoir une désignation de destination et/ou de ségrégation.

3. Système de manutention de bagages selon la revendication 1 ou 2, dans lequel des lignes individuelles desdites lignes (10) peuvent être utilisées pour faire avancer des bagages s'y trouvant jusqu'au poste de chargement.

4. Système de manutention de bagages selon la revendication 1, 2 ou 3, dans lequel une pluralité desdites lignes (10) sont agencées verticalement les unes au-dessus des autres.

5. Système de manutention de bagages selon la revendication 4, le système comprenant en outre un élément de convoyage mobile (14) pouvant être utilisé pour accéder à des lignes individuelles (10) dans une pile desdites lignes agencées verticalement.

6. Système de manutention de bagages selon l'une quelconque des revendications précédentes, dans lequel une pluralité desdites lignes (10) sont agencées horizontalement les unes à côté des autres.

7. Système de manutention de bagages selon l'une quelconque des revendications précédentes, comprenant une cellule d'assemblage supplémentaire comprenant une pluralité de lignes de pré-chargement pouvant être utilisées pour recevoir des bagages et un poste de chargement pouvant être utilisé pour recevoir des bagages provenant de lignes individuelles desdites lignes ; le poste de chargement de la cellule d'assemblage pouvant être utilisé pour recevoir des bagages provenant de lignes individuelles des lignes de la cellule d'assemblage supplémentaire.

8. Système de manutention de bagages selon l'une quelconque des revendications précédentes, comprenant en outre une pluralité de convoyeurs motorisés de manière sélective pouvant être utilisés pour déplacer des bagages depuis lesdites lignes jusqu'audit poste de chargement.

9. Système de manutention de bagages selon l'une quelconque des revendications précédentes, dans lequel le poste de chargement peut être utilisé pour guider des bagages reçus dans un conteneur de transport de bagages (18) situé de manière à pouvoir être enlevé.

10. Système de manutention de bagages selon la revendication 9, comprenant en outre un ou plusieurs composants sélectionnés parmi le groupe comprenant :
un bras robotisé pouvant être utilisé pour soulever les bagages depuis ledit poste de chargement (17) dans ledit conteneur de transport de bagages (18) ; et
un mécanisme robotisé pouvant être utilisé pour déplacer de manière sélective une extrémité de sortie dudit poste de chargement (17) jusqu'à une position prédéterminée dans ledit conteneur de transport de bagages (18).

11. Système de manutention de bagages selon la revendication 9 ou 10, dans lequel le système peut être utilisé pour enregistrer l'emplacement de chargement d'un article de bagage à l'intérieur d'un conteneur de transport de bagages (18) situé de manière à pouvoir être enlevé.

12. Système de manutention de bagages selon la revendication 9 ou selon l'une quelconque des revendications qui en dépendent, comprenant en outre un système de transport mécanique pouvant être utilisé pour transporter un conteneur de transport de bagages (18) vers et depuis le poste de chargement (17).

13. Système de manutention de bagages selon la revendication 12, dans lequel le système de transport mécanique comprend une installation de déchargement de conteneur pouvant être utilisée pour décharger un conteneur de transport de bagages (18) depuis le système de chariot électrique (20) jusqu'à un véhicule de transport subséquent.

14. Système de manutention de bagages selon la revendication 13, dans lequel le système comprend en outre un ou plusieurs composants sélectionnés parmi le groupe comprenant :
une zone de stockage pour le stockage temporaire d'un conteneur de transport de bagages (18) en attente de transfert sur un véhicule de transport subséquent ;
le système de transport mécanique pouvant être utilisé pour porter un conteneur de transport de bagages (18) contenant des bagages arrivant ; et
le système de transport mécanique étant un système de chariot électrique (20) ; un système à plateaux de convoyeur à rouleaux (90) ou un convoyeur à bande à rouleaux au sol.
